(19) Europäisches Patentamt
European Patent Office
Office européen des brevets

(11) Publication number: 0 212 928 A2

(12) EUROPEAN PATENT APPLICATION

(21) Application number: 86306155.2

(22) Date of filing: 07.08.86

(51) Int. Cl.4: C 09 K 19/02, C 09 K 19/36, G 02 F 1/13, G 02 F 1/133, C 09 K 19/58

(30) Priority: 12.08.85 GB 8520172
27.06.86 GB 8615750

(43) Date of publication of application: 04.03.87 Bulletin 87/10

(84) Designated Contracting States: DE FR IT NL

(71) Applicant: The General Electric Company, p.l.c., 1 Stanhope Gate, London W1A 1EH (GB)

(72) Inventor: Hilsum, Cyril, 12 Eastglade, Pinner Middlesex (GB)
Inventor: Lewis, Martin Rhodri, 38 Lyndhurst Gardens, London, N3 1TD (GB)
Inventor: Wiltshire, Michael Charles Keogh, 3 The Brackens, High Wycombe Buckinghamshire (GB)

(74) Representative: Smith, Janet Frances, The General Electric Company, p.l.c. Central Patent Department (Wembley Office) Hirst Research Centre East Lane, Wembley, Middlesex, HA9 7PP (GB)

(54) Thermal imaging device.

(57) A thermal imaging device uses a compensated cholesteric liquid crystal mixture (1) as its thermooptic conversion element. The mixture is obtained by mixing two cholesteric liquid crystals, one with a left-handed twist and the other with a right-handed twist. The twists cancel at a compensation temperature ($T_N$) the mixture thus having infinite twist at this temperature. The device is designed to operate with the mixture (1) held in the region of the compensation temperature ($T_N$).

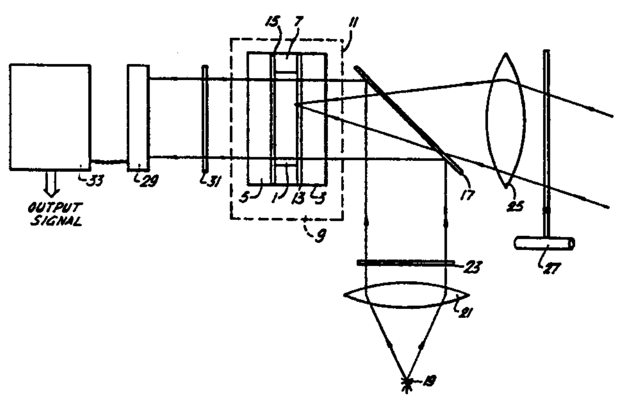


EP 0 212 928 A2

HRF/2575/3017/EPC

Thermal Imaging Device.

This invention relates to thermal imaging devices. In particular the invention relates to thermal imaging devices incorporating as their thermo-optic conversion elements liquid crystals whose optical properties vary in dependence on the intensity of thermal radiation incident on the crystal so as to provide optical indications of the intensity of the incident thermal radiation.

Such an imaging device is described for example in Sov.J.Opt.Technol.48 (2),1981, pages 65-68. The device described in this publication incorporates a cholesteric liquid crystal which shows enhanced temperatures near a cholesteric-smectic phase transition. Several workers have subsequently made thermal imaging devices incorporating such crystals.

It is an object of the present invention to provide a thermal imaging device in which the temperature dependence of the optical properties of a liquid crystal incorporated in the device is enhanced over that normally available.

According to the present invention a thermal imaging device includes as its thermo-optic conversion

element a compensated cholesteric liquid crystal obtained by mixing two cholesteric liquid crystals, one with left-handed twist, and the other with right-handed twist, the mixture having a composition such that the twists cancel at a compensation temperature the mixture thus having infinite pitch at the compensation temperature, the imaging device being designed to operate with the mixture held in the region of the compensation temperature.

Preferably one of the cholesteric liquid crystals is near a smectic phase change at the compensation temperature. By this means an even greater enhancement of the temperature dependence of the optical properties of the liquid crystal mixture is obtained.

The liquid crystal mixture will normally be confined between two surfaces. In such an arrangement the alignment of each of the cholesteric liquid crystals is suitably planar adjacent to one of the two surfaces and homeotropic adjacent to the other of the two surfaces

One thermal imaging device in accordance with the invention will now be described, by way of example only, with reference to the accompanying drawings in which:

Figure 1 is a schematic diagram of the device; and

Figure 2 illustrates the optical rotation against temperature characteristic of the device.

Referring firstly to Figure 1, the device includes a liquid crystal cell comprising a liquid crystal mixture 1 enclosed between two thin plastic pellicles, 3, 5 of a few microns thickness, separated by spacers 7. The cell is contained within a temperature controlled enclosure indicated as 9, at least one wall 11 of which is designed to be transparent to infra-red radiation emitted from a field of view to be imaged.

The liquid crystal mixture 1 is formed from two cholesteric liquid crystals, cholesteryl chloride which has a right-handed helical structure or twist, and cholesteryl myristate which has a left-handed helical structure or twist, the mixture including the two crystals in the proportions 1.6 to 1.0 by weight. The liquid crystal mixture also has a helical structure whose pitch is sensitive to the temperature, at a particular compensation temperature $T_N$ = 42.5°C the pitch being infinite as the mixture changes from a right-handed structure to a left-handed structure at this temperature. Each pellicle 3, 5 carries a respective alignment layer 13,15 effective to influence the alignment of the liquid crystal mixture adjacent to the layers. The layer 13 is a planar alignment layer, which may be obtained by unidirectional rubbing of the plastic pellicle 3, or by depositing another polymer such as polyimide or polyvinylacetate (PVA) on the pellicle 3 and rubbing that. Other methods of achieving planar alignment are well known to those skilled in the art of liquid crystal devices and may also be used. The layer 15 is a homeotropic alignment layer and may be a monolayer, or a few molecular layers, of a surfactant such a lecithin or the organosilane octadecyl -triethoxysilane (OTS). The latter has the better thermal stability and is preferable in this particular application. Again other suitable methods of achieving the required alignment are well known to those skilled in the art.

Thus the direction of the directors of the liquid crystal mixture 1 will vary through the mixture as indicated in the figure, the director adjacent to

layer 13 being parallel to the plane of the pellicle 3, and that adjacent to the layer 15 being homeotropic. The director adjacent to the layer 15 is thus able to rotate about its own axis normal to the pellicle 5, as the layer 15 will have no effect on such a rotation. The alignment of the liquid crystal mixture is thus such that the pitch of the liquid crystal helix may adopt its natural value at any particular temperature such that the optical rotation experienced by light passing through the liquid crystal cell will be continuously variable as a function of temperature. Adjacent to the wall 11 there is placed a dichroic mirror 17 which is designed to transmit infra-red radiation, and reflect light of other wavelengths. The mirror 17 is angled so as to direct light from a source onto the pellicle 3, a lens 21 being used to provided a parallel beam of light from the source 19, and a polariser 23 being provided to polarise this beam, in a direction parallel to the director of the liquid crystal adjacent to the pellicle 3. An infra-red lens 25 is positioned so as to focus infra-red radiation from the field of view onto the liquid crystal mixture, a chopper 27 also being provided to chop the incident radiation.

At the side of the enclosure 9 remote from the wall 11 there is provided a detector 29 such as a TV camera, an analyser 31 being interposed between the detector 29 and the enclosure 9. The electrical output of the detector 29 is linked to a signal processor 33.

In use of the device the temperature controlled enclosure 9 is operated so as to maintain the liquid crystal mixture 1 at a temperature either just below or just above the compensation temperature $T_N$ of the mixture. Infra-red radiation focussed onto the mixture 1 will cause the direction of polarisation of the light from the source 19 to be rotated by the mixture 1 by an amount dependent on the intensity of the incident infra-red radiation. Thus, due to the presence of the analyser 31 interposed between the detector 29 and the enclosure 9 the pattern of light from the source 19 received by the detector will also be dependent on the intensity of the infra-red radiation incident on the mixture 1. An image corresponding to the pattern of the infra-red radiation on the mixture 1 may thus be formed, the signal processor 33 being arranged to enhance the contrast of the pattern of light incident on the detector 29 by electronic means, to produce an output signal to be used to form the image.

Within 1°C of the temperature $T_N$ a very high sensitivity of the rotatory power of the mixture with temperature is obtained, as shown in Figure 4.1.3. of "Liquid Crystals" by S. Chandrasekhar, published by the Cambridge University Press, 1977. Thus a high device sensitivity to temperature is achieved, giving the device the ability to detect small temperature changes in the field of view. As the sensitive range of 1°C of the liquid crystal is relatively large for such a device, the temperature stabilisation required for the device is not too critical compared to that frequently required in thermal imaging devices. By maintaining the mixture 1 at a temperature just off the compensation temperature, ambiguity is avoided.

Alternatively if the mixture 1 is maintained at its compensation temperature when the chopper 27 is blocking the incident radiation from the field of view the dark field signal of the detector 29 will be

independent of the thickness of the liquid crystal mixture 1 thus facilitating the signal processing carried out by the processor 33.

The birefringence of the crystal mixture 1 at the compensation temperature $T_N$ is also very sensitive to temperature, and this may also be employed in the imaging device to obtain an optical indication of the temperature of incident infra-red radiation on the imaging device.

A number of other compensated liquid crystal mixtures suitable for use in a thermal imaging device in accordance with the invention are also available. Such other mixtures may be included in devices of the same general form as the above device. One such mixture is a mixture of the two biphenyl chiral dopants, whose formulae are given below, in a nematic host; the two dopants induce reverse twists to each other in the host.

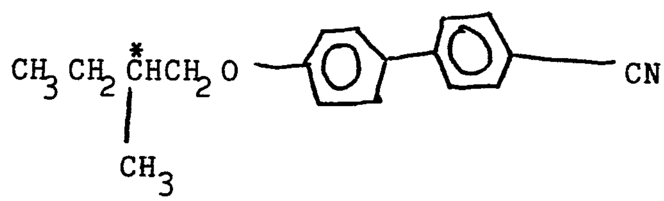

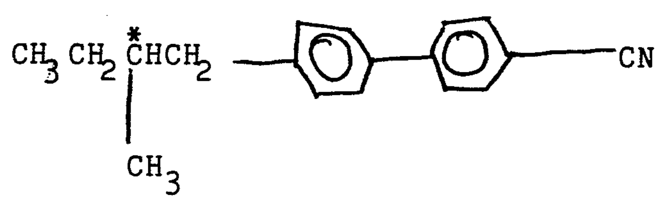

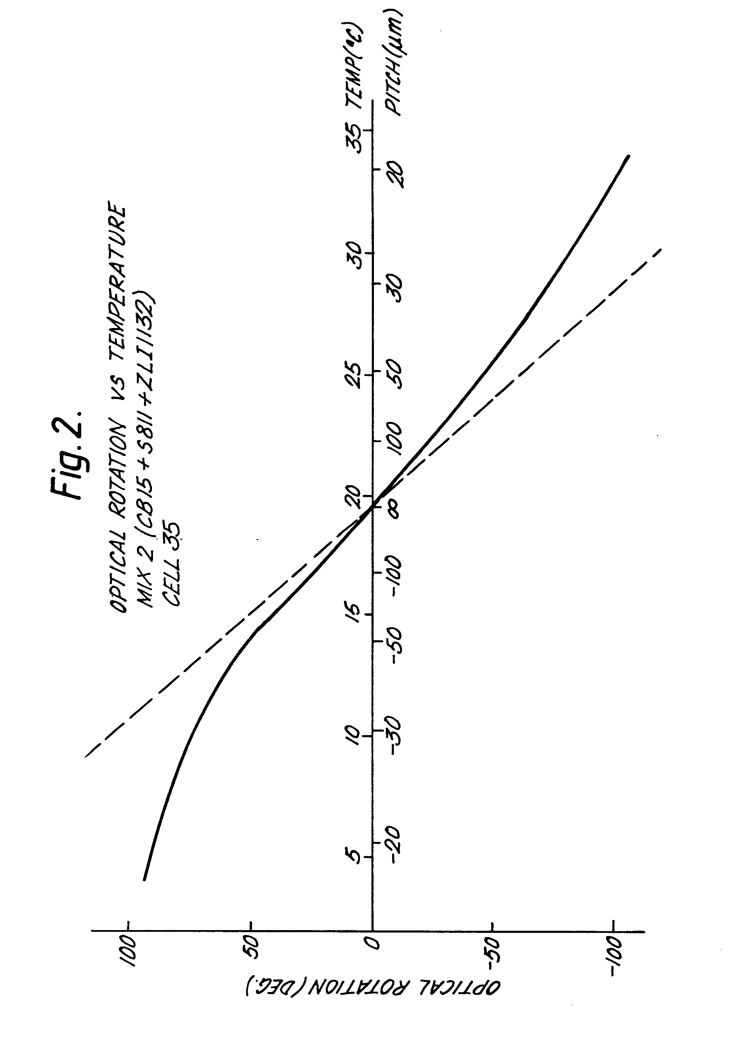

An alternative mixture is a mixture of CB15 produced by BDH, and S811 produced by Merck in ZLI 1132 also produced by Merck. The optical rotation of this mixture as a function of temperature and hence of liquid crystal pitch is shown in Figure 2. The dashed line

represents the equation $\rho = 2\pi d/p$ where $\rho$ is the optical rotation;

d is the liquid crystal cell thickness for a corresponding wholly planar alignment; and

p is the liquid crystal pitch.

As can be seen from this figure, the effect of the variation in director alignment through the liquid crystal is to reduce the effective thickness of the cell, and hence the gradient of the graph. The full line in the figure represents the measured characteristic and shows the required continuous variation of optical rotation with pitch and temperature.

It will be appreciated that the temperature sensitivity of a device in accordance with the invention will be enhanced still further if one of the cholesteric components is near a smectic phase change at the compensation temperature. This will give an enhanced rate of change of pitch with temperature, thus increasing the rate of change of rotatory power with temperature.

It will also be appreciated that variations in the form of the liquid crystal cell and the optical components will be readily apparent to those skilled in the art of imaging devices.

CLAIMS

1. A thermal imaging device characterised in that it includes as its thermo-optic conversion element a compensated cholesteric liquid crystal (1) obtained by mixing two cholesteric liquid crystals, one with a left-handed twist, and the other with a right-handed twist, the mixture having a composition such that the twists cancel at a compensation temperature the mixture thus having infinite pitch at the compensation temperature, the imaging device being designed to operate with the mixture held in the region of the compensation temperature.

2. A device according to Claim 1 in which one of the cholesteric liquid crystals is near a smectic phase change at the compensation temperature.

3. A device according to either one of the preceding claims in which the liquid crystal mixture is confined between two surfaces (3,5) the alignment of the liquid crystal mixture being planar adjacent to one (3) of the two surfaces, and homeotropic adjacent to the other (5) of the two surfaces.

4. A device according to Claim 3 in which the homeotropic alignment is produced by a layer (15) of a surfactant on said other surface (5).

5. A device according to Claim 4 in which the surfactant is an organosilane octadecyl-triethoxysilane.

6. A device according to any one of Claims 3 to 5 in which the planar alignment is produced by a unidirectionally rubbing said one surface.

7. A device according to any one of Claims 3 to 5 in which said one surface (13) is a polymer.

8. A device according to any one of the preceding claims in which one of said two cholesteric liquid crystals is cholesteryl myristate, and the other of

said two cholesteric liquid crystals is cholesteryl chloride.

9. A device according to any one of Claims 1 to 7 in which said mixture is a mixture of two biphenyl chiral dopants in a nematic host, the two dopants inducing reverse twists to each other in the host.

10 A device according to Claim 9 in which the two dopants are

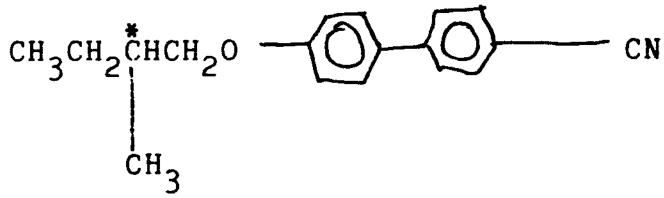

and

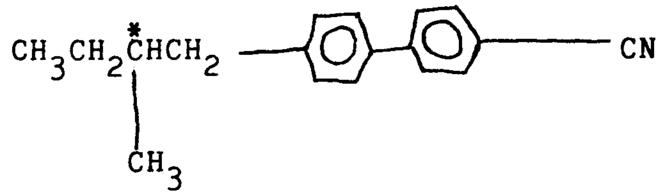

11. A device according to any one of Claims 1 to 7 in which the mixture comprises CB15 produced by BDH and S811 produced by Merck in ZLI1132 produced by Merck.

12. A device according to any one of the preceding claims in which means are provided for maintaining the mixture at a temperature just off the compensation temperature so as to avoid ambiguity in the output signal of the device.

13. A device according to any one of Claims 1 to 11 in which a chopper is arranged to chop infrared radiation incident on the device, and means are provided for maintaining the mixture at its compensation temperature while the chopper is blocking the incident radiation from the device.

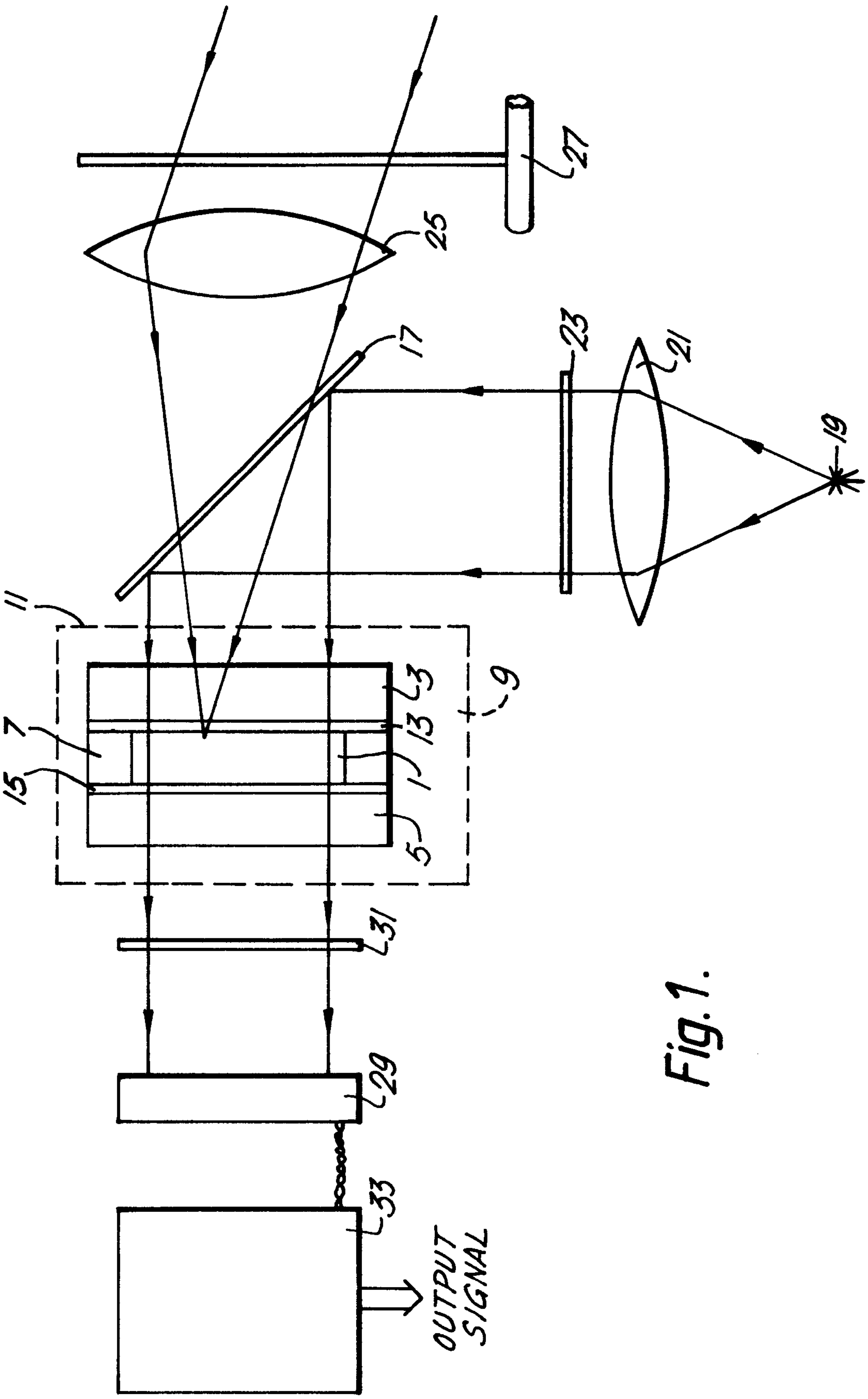


Fig.1.

0212928

2/2

Fig. 2.